# EUROPÄISCHE PATENTANMELDUNG

(11) **EP 0 980 818 A2**
(43) Veröffentlichungstag der Anmeldung: **23.02.2000**
(21) Anmeldenummer: 99114409.8
(22) Anmeldetag: 22.07.1999
(51) Int. Cl.: B62D 25/12, B60J 5/00, B60J 5/04, B23K 33/00

(54) **Spannvorrichtung**

(30) Priorität: 18.08.1998 DE 19837305
(71) Anmelder: Thyssen Krupp Industries AG, 45128 Essen (DE)
(72) Erfinder: Zimmer, Erich, 66687 Wadern (DE)
(74) Vertreter: Dahlkamp, Heinrich-Leopold, Dipl.-Ing.

(57) **Zusammenfassung**

Die Erfindung betrifft eine Spannvorrichtung (5), insbesondere für die Herstellung einer Verbindung der Randbereiche von Außenblech und Innenblech einer Kfz-Tür (10) oder einer Kfz-Klappe, mit wenigstens einer in einem Gestell (3) geführten Formbacke (1), an der ein Antrieb angreift. Damit die Endlage der Formbacke (1) und damit die Lage einer Verbindungsnaht zwischen den zu verbindenden Blechteilen exakt und reproduzierbar eingestellt werden kann, soll die Formbacke (1) an einem exzentrisch an einer gestellfesten Achse angeordneten Spannglied abgestützt und geführt sein, das einen Befestigungsarm (6) aufweist, an dem ein Stelltrieb angreift, wobei das Spannglied eine darin exzentrisch angeordnete Bohrung für eine verstellbare Exzenterbuchse aufweist, die exzentrisch auf der gestellfesten Achse gelagert ist. Weiterhin soll eine Einrichtung zum Fixieren der relativen Stellung von Spannglied und Buchse vorgesehen sein.

## Beschreibung

Die Erfindung betrifft eine Spannvorrichtung, insbesondere für die Herstellung einer Verbindung der Randbereiche von Außenblech und Innenblech einer Kfz-Tür oder einer Kfz-Klappe, mit wenigstens einer in einem Gestell geführten Formbacke, an der ein Antrieb angreift.

Derartige Spannvorrichtungen werden eingesetzt, um die Randbereiche von zu verbindenden Blechen einer Kfz-Tür einzuspannen und so zu positionieren, daß die Randbereiche der Bleche mit Hilfe eines geführten Laserstrahls miteinander verschweißt werden können (DE 195 38 595 A1). In der Praxis wird mit Kniehebelspannern gearbeitet, die in ihrer Endlage nicht oder nur grob einstellbar sind. Als Stelltriebe werden Hubzylinder eingesetzt. Um die Anzahl der Hubzylinder gering zu halten, müssen Übertragungselemente eine verhältnismäßig große Steifigkeit besitzen. Das führt zu großen Massen der bewegten Übertragungselemente.

Aufgabe der Erfindung ist es, eine Spannvorrichtung anzugeben, mit der die Endlage der Formbacke und damit die Lage einer Verbindungsnaht zwischen den zu verbindenden Blechteilen exakt und reproduzierbar eingestellt werden kann.

Diese Aufgabe wird dadurch gelöst,
a) die Formbacken an einem exzentrisch an einer gestellfesten Achse angeordnetem Spannglied abgestützt und geführt ist, das einen Betätigungsarm aufweist, dem ein Stelltrieb angreift,
b) das Spannglied eine darin exzentrisch angeordnete Bohrung für eine verstellbare Exzenterbuchse aufweist, die exzentrisch auf der gestellfesten Achse gelagert ist, und
c) zum positionsgenauen Fixieren der Verbindungsstelle und der relativen Stellung von Spannglied und Exzenterbuchse die Exzenterbuchse eine Positionsmarke und ein zugeordneter Abschnitt auf der Stirnseite des Spanngliedes eine Skala aufweist.

Insbesondere kann das Spannglied einen zylindrischen Umfang aufweisen. Durch Verdrehen der Exzenterbuchse relativ zum Spannglied kann dessen Hub bei Betätigen durch das Stellglied sehr genau eingestellt werden, so daß die vom Stellglied bewegte Formbacke die Verbindungsnaht der miteinander zu verbindender Bleche in eine der vorgegebenen Schweißbahn exakt entsprechende Position bringt. Werden Abweichungen von der Schweißbahn oder Verschleiß- sowie Bauteilungenauigkeiten festgestellt, dann können diese durch Verstellen der Exzenterbuchse korrigiert werden. Dabei weist die Exzenterbuchse eine Positionsmarke und ein zugeordneter Abschnitt auf der Stirnseite des Spanngliedes eine Skala auf, so daß der jeweilige relative Drehwinkel zwischen Exzenterbuchse und Spannglied auch reproduzierbar eingestellt werden kann. Die Einrichtung zum Fixieren kann aus einer Klemmschraube bestehen, die das Spannglied mit der Exzenterbuchse verspannt.

Bei einer praktischen Ausführung weist die Formbacke einen im Gestell geführten und am Gestell über eine Feder abgestützten Stößel auf, an dem das Spannglied angreift. Dementsprechend wird die Formbacke bei Betätigung des Stellgliedes in ihre Betriebsstellung gebracht und bei Nachlassen der Stellkraft von der Feder wieder in ihre Urstellung zurückgeführt.

Bei einer bevorzugten Ausführung ist der Betätigungsarm des Spanngliedes gelenkig, vorzugsweise kugelgelenkig, mit einer Kupplungsstange verbunden, an der der Stelltrieb angreift. Bei dieser Ausführung ist es möglich, daß die Betätigungsarme aller Spannglieder über Kuppelstangen verbunden sind und dementsprechend von einem einzigen Stelltrieb betätigt werden. Der Stelltrieb kann ein Hubzylinder sein, dessen Kolbenstange gelenkig mit den Kupplungsstangen verbunden ist.

Im folgenden wird ein in der Zeichnung dargestelltes Ausführungsbeispiel der Erfindung erläutert; es zeigen:
- Fig. 1: schematisch eine Anordnung zur Verbindung der Randbereiche von Blechen einer Kfz-Tür z.B. durch Laserschweißen mit mehreren Spannvorrichtungen, die längs der Randbereiche der zu verbindenden Bleche angeordnet sind,
- Fig. 2: eine Draufsicht auf eine Spannvorrichtung mit zwei verschiedenen Exzentereinstellungen,
- Fig. 3: einen Schnitt in Richtung I-I durch den Gegenstand nach Fig. 2,

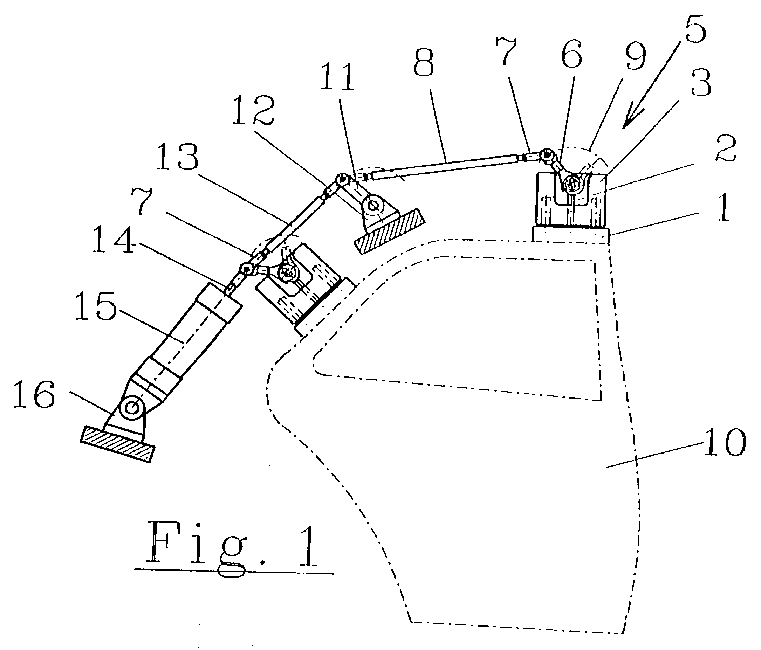

In Fig. 1 sind zwei Formbacken 1 einer Reihe von weiteren Formbacken dargestellt, mit denen die Randstreifen nicht dargestellter Kfz-Bleche, z.B. eines Außenbleches und eines Innenbleches einer Kfz-Tür 10 oder einer Kfz-Klappe in eine vorbestimmte Position gebracht werden, in der sie z.B. durch Laserschweißen miteinander verbunden werden. Jede Formbacke 1 weist einen Stößel 2 auf, der in einem Gestell 3 geführt ist und über eine Druckfeder 4 so im Gestell 3 abgestützt ist, daß die Druckfeder 4 die Formbacke 1 in Richtung auf das Gestell 3 zieht.

Zu jeder Formbacke 1 gehört eine am Gestell 3 gelagerte Spannvorrichtung 5 mit einem Betätigungsarm 6, der über ein Kugelgelenk 7 an eine Kupplungsstange 8 angeschlossen ist. Die Kupplungsstange 8 ist gelenkig mit einem Schwenkhebel 11 verbunden, der bei 12 gehäusefest gelagert ist. Schwenkhebel 11 und Kupplungsstange 8 sind über ein gemeinsames Gelenk mit einer weiteren Kupplungsstange 13 verbunden. Am anderen Ende der Kupplungsstange 13 greift gelenkig die Kolbenstange 14 eines bei 16 am Gestell 3 gelagerten Hubzylinders 15 an. Wird die Kolbenstange 14 betätigt, dann werden die Kupplungsstangen 8 und 13 mit den daran über das Kugelgelenk 7 angeschlossenen Betätigungsarmen 6 um den Schwenkradius 9 bewegt, wobei die Spannvorrichtungen 5 entlastet und die Formbacken 1 unter der Wirkung ihrer Druckfedern 4 in ihre Ruhestellung zurückgeführt oder die Spannvorrichtungen 5 belastet und die Formbacken 1 gegen die Wirkung der Druckfedern 4 gespannt werden.

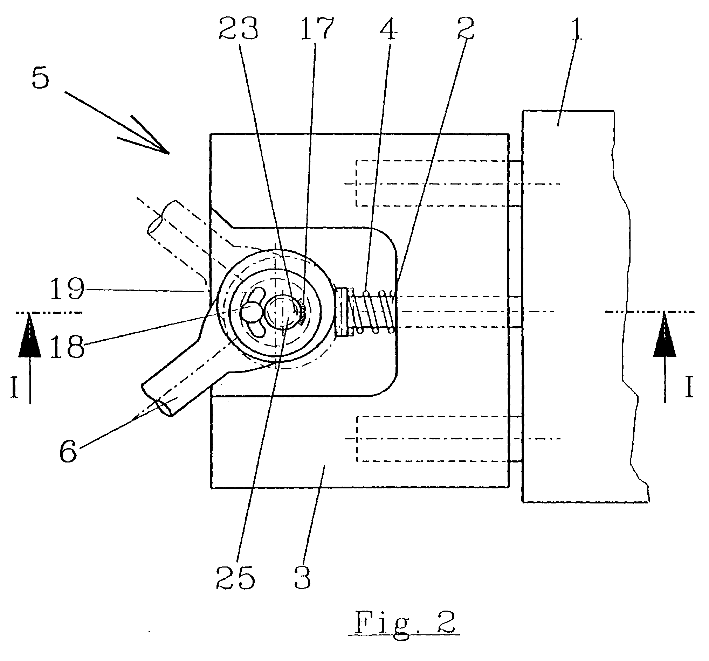

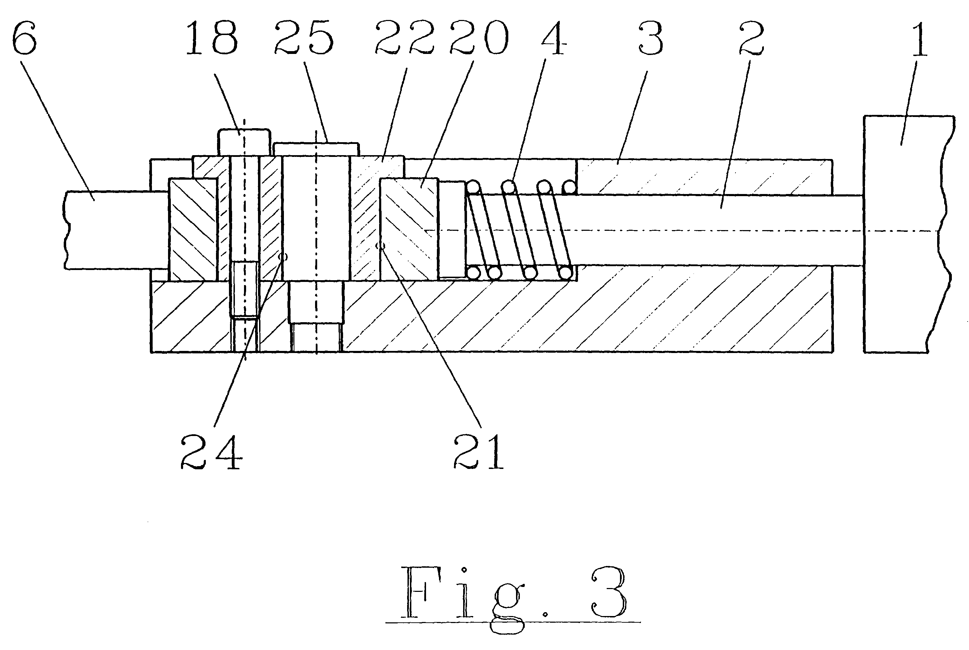

Einzelheiten der Spannvorrichtungen 5 sind in den Figuren 2 und 3 wiedergegeben. Zu jeder Spannvorrichtung gehört ein mit dem Betätigungsarm 6 fest verbundenes Spannglied 20 mit zylindrischem Umfang. Das Spannglied 20 weist eine exzentrisch angeordnete Bohrung 21 für eine darin eingesetzte Exzenterbuchse 22 auf, die an einer Stirnseite des Spanngliedes 20 abgestützt ist. Die Exzenterbuchse 22 weist ihrerseits eine exzentrisch angeordnete Bohrung 24 auf, mit der sie auf einen gestellfesten Achsbolzen 25 aufgesetzt ist.

Fig. 2 erläutert, wie der Verstellhub des Spanngliedes ein bzw. verstellt werden kann. An der Exzenterbuchse 22 befindet sich eine Positionsmarke 23 und ein zugeordneter Abschnitt auf der Stirnseite des Spanngliedes 20 trägt eine Skala 17. Durch Verdrehen der auf der gestellfesten Achse 25 gelagerten Exzenterbuchse 22 relativ zum Spannglied 20 kann die Position des Spanngliedes 20 relativ zum Betätigungsarm 6 verändert werden. Mit der Positionsmarke 23 und der Skala 17 ist jede Einstellung auch reproduzierbar. Die relative Lage von Exzenterbuchse 22 und Spannglied 20 kann fixiert werden mit Hilfe einer Klemmschraube 18, deren Kopf an der Außenseite der Exzenterbuchse 22 abgestützt ist und die eine Ausnehmung 19 in der Exzenterbuchse 22 durchdringt und auf der anderen Seite so befestigt ist, die Exzenterbuchse 22 mit dem Spannglied 20 verspannt wird.

### Bezugszeichenliste:

- 1: Formbacken
- 2: Stößel
- 3: Gestell
- 4: Druckfeder
- 5: Spannvorrichtung
- 6: Betätigungsarm
- 7: Kugelgelenk
- 8: Kupplungsstange
- 9: Schwenkradius von 7
- 10: Kfz-Tür
- 11: Schwenkhebel
- 12: Lager
- 13: Kupplungsstange
- 14: Kolbenstange
- 15: Hubzylinder
- 16: Lager
- 17: Skala
- 18: Klemmschraube
- 19: Ausnehmung
- 20: Spannglied
- 21: Bohrung in 20
- 22: Exzenterbuchse
- 23: Positionsmarke
- 24: Bohrung in 22
- 25: Achsbolzen

## Patentansprüche

1. Spannvorrichtung, insbesondere für die Herstellung einer Verbindung der Randbereiche von Außenblech und Innenblech einer Kfz-Tür oder einer Kfz-Klappe, mit wenigstens einer in einem Gestell geführten Formbacke, an der ein Antrieb angreift, **dadurch gekennzeichnet**, daß
a) die Formbacke (1) an einem exzentrisch an einer gestellfesten Achse (25) angeordnetem Spannglied (20) abgestützt und geführt ist, das einen Betätigungsarm (6) aufweist, an dem ein Stelltrieb angreift,
b) das Spannglied (20) eine darin exzentrisch angeordnete Bohrung (21) für eine verstellbare Exzenterbuchse (22) aufweist, die exzentrisch auf der gestellfesten Achse (25) gelagert ist, und daß
c) zum positionsgenauen Fixieren der Verbindungsstelle und der relativen Stellung von Spannglied (20) und Exzenterbuchse (22) die Exzenterbuchse (22) eine Positionsmarke (23) und ein zugeordneter Abschnitt auf der Stirnseite des Spanngliedes (20) eine Skala (17) aufweist.

2. Spannvorrichtung nach Anspruch 1, **dadurch gekennzeichnet**, daß das Spannglied (20) einen zylindrischen Umfang aufweist.

3. Spannvorrichtung nach einem der Ansprüche 1 oder 2, **dadurch gekennzeichnet**, daß die Einrichtung zum Fixieren aus einer Klemmschraube (18) besteht, die das Spannglied (20) mit der Exzenterbuchse (22) verspannt.

4. Spannvorrichtung nach einem der Ansprüche 1 bis 3, **dadurch gekennzeichnet**, daß die Formbacke (1) einen im Gestell (3) geführten und am Gestell über eine Feder (4) abgestützten Stößel (2) aufweist, an dem das Spannglied (20) angreift.

5. Spannvorrichtung nach einem der Ansprüche 1 bis 4, **dadurch gekennzeichnet**, daß der Betätigungsarm (6) des Spanngliedes (20) gelenkig, vorzugsweise kugelgelenkig, mit einer Kupplungsstange (8/13) verbunden ist, an der der Stelltrieb angreift.

6. Spannvorrichtung nach einem der Ansprüche 1 bis 5, **dadurch gekennzeichnet**, daß der Stelltrieb ein Hubzylinder (15) ist, dessen Kolbenstange (14) gelenkig mit den Kupplungsstangen (8,13) verbunden ist.

7. Spannvorrichtung nach einem der Ansprüche 1 bis 6, **dadurch gekennzeichnet**, daß der Stelltrieb ein Hubzylinder (15) ist, dessen Kolbenstange (14) gelenkig mit den Kupplungsstangen (8, 13) verbunden ist.
